**Europäisches Patentamt**

**European Patent Office**

**Office européen des brevets**

(19)

(11) Veröffentlichungsnummer: **0 364 623 B1**

# (12) EUROPÄISCHE PATENTSCHRIFT

(45) Veröffentlichungstag der Patentschrift: **29.06.94**

(51) Int. Cl.⁵: **G21C 3/32**

(21) Anmeldenummer: **88117596.2**

(22) Anmeldetag: **21.10.88**

(54) **Brennelement, insbesondere für einen Druckwasser-Kernreaktor.**

(43) Veröffentlichungstag der Anmeldung:
**25.04.90 Patentblatt 90/17**

(45) Bekanntmachung des Hinweises auf die
Patenterteilung:
**29.06.94 Patentblatt 94/26**

(84) Benannte Vertragsstaaten:
**BE CH DE ES FR GB IT LI NL SE**

(56) Entgegenhaltungen:
**EP-A- 0 196 655**
**FR-A- 1 549 344**
**FR-A- 2 258 691**
**US-A- 4 059 484**

(73) Patentinhaber: **SIEMENS AKTIENGESELL-
SCHAFT**
**Wittelsbacherplatz 2**
**D-80333 München(DE)**

(72) Erfinder: **Suchy, Peter, Dipl.-Ing.**
**Anderlohrstrasse 48**
**D-8520 Erlangen(DE)**
Erfinder: **Holley, Heinz-Peter, Dipl.-Ing. Ph.D.**
**Reutherstrasse 57B**
**D-8550 Forchheim(DE)**
Erfinder: **Schricker, Wolfgang, Dipl.-Ing.**
**Händelstrasse 3**
**D-8501 Schwaig(DE)**

**Beschreibung**

Die Erfindung betrifft ein Brennelement für einen Druckwasser-Kernreaktor, mit einem Bündel zueinander paralleler, jeweils Kernbrennstoff in einem Hüllrohr enthaltender Brennstäbe.

Brennelemente für Druckwasser-Kernreaktoren besitzen meist einen quadratischen Querschnitt. Sie enthalten eine Mehrzahl (z.B. 17 x 17) von eng benachbarten, im Betrieb von moderierendem Wasser umgebenen Brennstoffstäben oder Brennstäben, die gitterförmig in Reihen angeordnet und zu einem Bündel zusammengefaßt sind. Der Druckwasserreaktor ist mit einem Kern versehen, der aus einer Anzahl solcher einzeln auswechselbarer, innerhalb eines Druckkessels angeordneter Brennelemente aufgebaut ist. In Führungsrohren der Brennelemente sind Steuerstäbe längsbeweglich geführt. Es können auch Führungsrohre vorgesehen sein, die einen zusätzlichen Moderatorstab enthalten.

Jeweils eine größere Anzahl von Brennstäben, Führungsrohre und in der Regel ein Instrumentierungsrohr bilden ein Bündel, das zu dem Brennelement durch eine Tragstruktur zusammengefaßt ist, die oben einen Brennelementkopf, unten einen Brennelementfuß und in mehreren Zwischenebenen je einen Abstandhalter mit einer Gitterstruktur enthält, durch deren Maschen je ein Brennstab oder ein Führungs- oder Instrumentierungsrohr geführt ist, um diese Stäbe und Rohre in einer gewünschten Position durch geeignete Stützkonstruktionen (z.B. Noppe-Feder-Kombinationen) zu halten.

In der US-A 4.059.484 ist der Abstandhalter aus quadratischen Maschen aufgebaut, die entweder alle eine verhältnismäßig kleine Fläche aufweisen, oder im Bündelinneren zu Inseln mit größeren Maschen zusammengefaßt sind, so daß dann eine ungleichmäßige Gitterstruktur entsteht. In den größeren Maschen befinden sich die Führungsrohre sowie dickere Brennstäbe mit einem anders angereicherten Kernbrennstoff, der in entsprechend starken Hüllrohren eingefüllt ist.

Im Druckwasserreaktor treten nämlich konstruktionsbedingt, und zwar durch die heterogene radiale Verteilung von Führungsrohren und ggf. von einem Instrumentierungsrohr sowie von einem Wasserspalt zwischen benachbarten Brennelementen, gewisse Moderator-Inhomogenitäten auf. Die uneinheitliche lokale Moderator-Verteilung über den Querschnitt eines Brennelements führt zu einer entsprechend uneinheitlichen lokalen Leistungserzeugung. Z.B. tritt in der Nähe der Führungsrohre, die mit dem Moderator (z.B. Wasser) angefüllt sind, gegenüber dem Brennelementmittelwert eine höhere lokale Leistungserzeugung auf. Dies führt also zu einer heterogenen Leistungserzeugung von Brennstab zu Brennstab und damit u.a. zu einer uneinheitlichen Brennstoffausnutzung sowie zu starken Unterschieden im Brennstab-Abbrand und in der lokalen Brennstab-Korrosion.

In der EP-A-196.655 sind ein Druckwasser- und ein Siedewasser-Brennelement gezeigt, wobei das Siedewasser-Brennelement relativ wenige Brennstäbe enthält und aus hydrodynamischen und mechanischen Gründen von einem Kasten umgeben ist. In einer Ecke des Kastens sind dünne Brennstäbe, im Kasteninneren dickere Brennstäbe mit einem verhältnismäßig großen Abstand und am restlichen Rand des Kastens Brennstäbe mit einer mittleren Querschnittsfläche und einem kleinen gegenseitigen Abstand angeordnet. Diese unterschiedlich dicken und ungleichmäßig verteilten Brennstäbe passen nicht in einen gitterförmigen Abstandhalter mit quadratischen Maschen gleicher Maschenflächen. Führungsrohre sind, wie allgemein bei Siedewasser-Brennelementen, nicht vorgesehen.

Das Druckwasser-Brennelement dieser EP-A-196.655 enthält zwar ebenfalls dickere und dünnere Brennstäbe, die aber in quadratische, flächengleiche Maschen eines Abstandhalters hineinpassen. Jedes der über den Brennelement-Querschnitt verteilten Führungsrohre ist von vier dünneren Brennstäben umgeben und bildet mit diesen eine kreuzförmige Struktur. Auch die Brennstäbe am Rand des Bündels haben - bei gleichem Abstand ihrer Mittelpunkte - einen kleineren Querschnitt, während alle anderen Brennstäbe dicker sind.

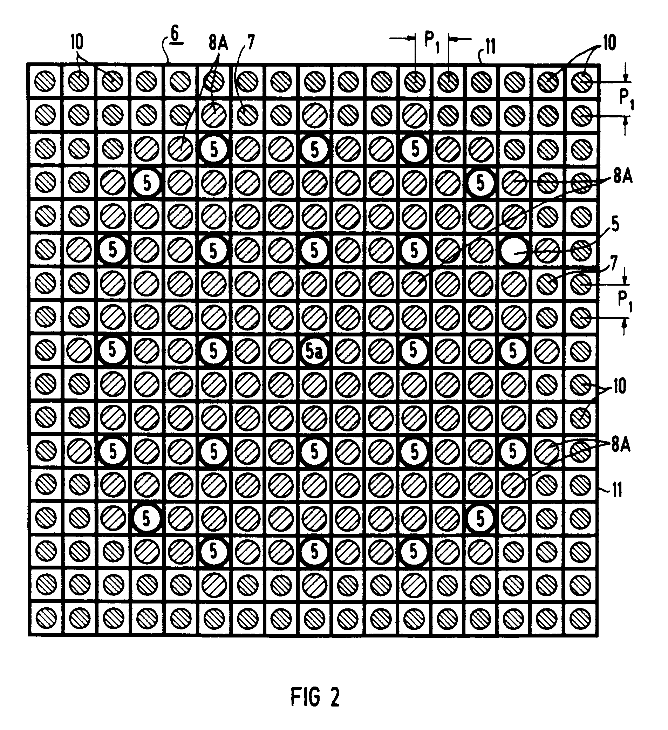

Aus der EP-A-0 199 197 ist ein spezielles Brennelement für einen Siedewasserreaktor bekannt, bei dem einige Brennstäbe mit einem Mantel aus Gadolinium, einem Neutronengift, versehen sind und somit einen größeren Außendurchmesser haben als andere Brennstäbe. Dies dient dort aber nicht zur Vergleichmäßigung der Leistungsdichteverteilung, sondern ist bedingt dadurch, daß das mit Gadolinium umhüllte Pellet bei gleichem Brennstoffgehalt zwangsläufig einen größeren Durchmesser haben muß als konventionelle Pellets. Dies ergibt sich auch daraus, daß dort in Fig. 2 zwar zwei Wasserstäbe dargestellt sind, aber keine Maßnahmen zur Vergleichmäßigung der Leistungserzeugung im Bereich dieser Wasserstäbe gezeigt oder beschrieben sind.

Auch das aus der FR-A 1.549.344 bekannte Brennelement enthält nur wenige Brennstäbe und keine Führungsrohre, da es für einen Siedewasser-Reaktor bestimmt ist. Die Brennstäbe sind dabei gleich dick und in - geradlinigen oder geschwungenen - Reihen derart angeordnet, daß der gegenseitige Abstand der Brennstäbe zur Mittelachse des Brennelementes hin zunimmt.

Für einen Natrium-Kernreaktor zeigt die FR-A-2.258.691 ein hexagonales Brennelement, dessen Randstäbe nach außen gerückt sind, um den Abstand zu Brennstäben, die weiter innen liegen, zu vergrößern.

Der Erfindung liegt die Aufgabe zugrunde, ein Druckwasser-Brennelement bezüglich der ungleichmäßigen lokalen Leistungserzeugung zu verbessern. Es soll eine wirtschaftlich bessere Ausnutzung des im Kern des Kernreaktors vorhandenen Brennstoffs, verbunden mit einer Reduktion der maximal auftretenden lokalen thermischen Brennstabbelastung, erreicht werden, möglichst ohne die mechanische Stabilität und Funktionsfähigkeit (Führungsrohre, Abstandhalter etc.) des Druckwasser-Brennelementes zu beeinträchtigen.

Diese Aufgabe wird erfindungsgemäß durch die Merkmale des Anspruchs 1 gelöst.

Das Element enthält also Abstandshalter mit quadratischen, flächengleichen Maschen, die jeweils ein Brennelement oder ein Führungsrohr (bzw. ein Instrumentierungsrohr, falls Instrumentierungsrohre im Inneren des Brennstab-Bündels vorgesehen sind) aufnehmen.

Die Position der Brennstäbe in den jeweiligen Maschen und die Durchmesser sind dabei so gewählt in Abhängigkeit von der Lage der jeweiligen Maschen relativ zu dem Rand des Bündels, den Führungsrohren und der dort jeweils herrschenden Dichte thermischer Neutronen, daß sich eine möglichst gleichmäßige Leistungsverteilung über den Querschnitt des Brennelementes einstellt.

Wegen der vorgegebenen quadratischen Struktur der flächengleichen Maschen stößt jede Masche im Inneren ("Innenmasche") mit einer ihrer vier Breitseiten an die Breitseite einer anderen Masche, die daher an der Masche unmittelbar anliegt. Eine Masche am Rand des Bündels (d.h. eine "Randmasche") besitzt dagegen zwei unmittelbar anliegende Randmaschen und nur eine weitere unmittelbar anliegende Innenmasche.

Bezieht man sich auf den Abstand der Brennstab-Mittelpunkte oder die Außendurchmesser der Hüllrohre in den Randmaschen, so ist eine Verkleinerung des Abstandes zwischen einem Führungsrohr und den Brennstäben in den unmittelbar anliegenden Innenmaschen nahezu gleichwertig mit einer Vergrößerung des Hüllrohr-Außendurchmessers: In beiden Fällen wird eine Störung weitgehend ausgeglichen, die dadurch entsteht, daß in der entsprechenden Masche ein Führungsrohr statt eines Brennstabes angeordnet ist.

Eine Verkleinerung des Brennstab/Führungsrohr-Abstandes wird trotz der flächengleichen Maschen dadurch erreicht, daß die Mittelachse des Brennstabes aus der Mitte der entsprechenden Masche heraus in Richtung des Führungsrohres versetzt ist.

Dadurch vergrößert sich auch der Abstand des derart versetzten Brennstabes zu Brennstäben, die in der Mitte anderer, unmittelbar anliegenden Maschen sitzen. Dieser vergrößerte Brennstab/Brennstab-Abstand wirkt daher bei gleich dikken Brennstäben wie eine Verringerung der Dicke der anderen Brennstäbe, so daß daher durch eine verringerte Dicke der Randstäbe oder einen vergrößerten Brennstab/Brennstab-Abstand zwischen je einem Randstab und einem weiter innen liegenden Stab die gleiche Wirkung auf die weiter innen liegenden Brennstäbe erreicht werden kann.

Ein größerer Hüllrohr-Durchmesser bietet darüber hinaus die Möglichkeit, mehr Brennstoff einzufüllen. Im Interesse einer einfachen Fertigung und Lagerhaltung ist es allerdings vorteilhaft, bei der Variante mit ungleichmäßiger Brennstab-Verteilung, d.h. aus den Mittelpunkten der gleichmäßigen Maschen herausgerückten Brennstäben, für alle Brennstäbe die gleichen Durchmesser bzw. bei einer Variante für unterschiedliche Durchmesser die gleichmäßige Brennstabverteilung mit dem konstanten Standard-Abstand vorzusehen. Als Standardabstand wird hier der dem rechteckigen Grundnetz zugrundeliegende Basisabstand verstanden; dieses kann insbesondere der herkömmliche Basisabstand (z.B. 12,6 oder 12,7 oder 14,3 mm) sein.

Durch die Wahl unterschiedlicher Außendurchmesser der Brennstäbe kann in der Nähe des mit dem Moderator angefüllten Führungsrohres und gegebenenfalls des Instrumentierungsrohres die lokale Leistung etwa auf den normierten Mittelwert gesenkt werden, womit eine Vergleichmäßigung der Leistungsverteilung im Brennelement erreicht wird.

Die Möglichkeit der ungleichmäßigen Verteilung der Brennstäbe erlaubt auch bei anderen Teilen des Brennelement-Querschnitts eine feinere lokale Abstimmung auf den normierten Mittelwert der Leistungserzeugung im Brennelement.

Durch die geschilderte Ausbildung mit unterschiedlichen Abständen der Brennstäbe am und/oder nahe am Brennelementrand kann dort die lokale Moderation angehoben und damit die Brennstoffausnutzung verbessert werden. Weiter kann hierdurch in einem Druckwasserreaktor der Druckverlust, welcher im Moderator ( = Kühlmittel) beim Durchströmen der Brennelemente auftritt, reduziert werden. Durch diese druckverlustmindernde Maßnahme werden ebenfalls Probleme hinsichtlich der hydraulischen Verträglichkeit von z.B. Brennelementen mit Zirkaloy-Abstandhaltern und Inconel-Abstandhaltern gelöst. Durch die verbesserte Kühlung der Brennstäbe am Brennelementrand durch den dort vergrößerten Strömungsquerschnitt wird dort auch die Hüllrohrkorrosion reduziert.

Durch diese Maßnahmen wird also einerseits eine Homogenisierung der Moderatorverteilung im Brennelement und damit eine besonders gute Brennstoffausnutzung erreicht. Andererseits werden auch Heißstellen und Hüllrohrkorrosion der Brennstäbe klein gehalten. Es gibt Brennelemente, in denen man auch beim Treffen der erfindungsgemäßen Maßnahmen das Brennstoffgewicht konstant halten möchte, wenn dieses bereits groß ist, und es gibt solche Brennelemente, bei denen man beim Treffen der erfindungsgemäßen Maßnahmen das Brennstoffgewicht vergrößern möchte, weil es zu gering ist. In beiden Brennelementtypen ergibt sich eine Reduzierung der Heißstellen und eine Verringerung der Hüllrohrkorrosion. Durch das hohe Brennstoffgewicht im Brennelement können negative Wirtschaftlichkeitseffekte, die sich aus einer Reduktion der Zykluszahl sowie einer Erhöhung der spezifischen Brennelement-Fabrikationskosten (Verwendung verschiedener Pelletdurchmesser und/oder Brennstabdurchmesser) ergeben, weitgehend kompensiert werden.

Eine weitere vorteilhafte Ausgestaltung zeichnet sich dadurch aus, daß mindestens ein Brennstab ein anderes Verhältnis der Hüllrohrwandstärke zum Hüllrohraußendurchmesser aufweist als ein anderer Brennstab. Durch diese Weiterbildung kann das Brennstoffgewicht (z.B. Urangewicht) im Brennelement ebenfalls vergrößert werden mit den obengenannten positiven wirtschaftlichen Effekten. Zusätzlich erreicht man durch die hiermit mögliche Reduktion des Hüllrohrmaterials im Brennelement und die damit verbundene Verbesserung der Neutronenökonomie gleichfalls eine Verbesserung der Wirtschaftlichkeit.

Besonders vorteilhaft ist die Erfindung beim Einsatz von Brennelementen mit Plutonium-Uran-Mischoxid-Brennstoff. Denn solche Mischoxide-Brennelemente haben normalerweise eine besonders inhomogene Leistungsverteilung über dem Querschnitt.

Diese erwähnten und weitere Ausbildungen der Erfindung sind in den Unteransprüchen 2 bis 9 gekennzeichnet.

Man kann die in der Maschenmitte angeordneten Brennstäbe zu einer ersten Brennstabgruppe und die versetzt angeordneten Brennstäbe zu einer zweiten Brennstabgruppe zusammenfassen.

Zur Lösung der erfindungsgemäßen Aufgabe genügt dann bereits eine geeignet gewählte ungleichmäßige Verteilung der Brennstäbe, d.h. die gewünschte Wirkung wird durch die Brennstäbe der zweiten Gruppe gelöst; dabei braucht gar kein Brennstab der ersten Gruppe im Brennelement vorhanden zu sein. Für die Anzahl $Z1$ der Brennstäbe der ersten Gruppe kann also $Z1 = 0$ gelten.

In der Regel wird es erforderlich sein, mindestens in einer Masche, die direkt an einer ein Führungsrohr enthaltende Masche anliegt, den Brennstab in Richtung des Führungsrohres gegenüber dem Maschenmittelpunkt zu versetzen.

Man kann aber in manchen Fällen die Aufgabe auch allein mit Brennstäben der ersten Gruppe bereits befriedigend lösen, wobei dann die Anzahl $Z2$ der Brennstäbe der zweiten Gruppe zu $Z2 = 0$ gewählt sein kann. Dabei ist dann wenigstens in einer Masche, die an einer ein Führungsrohr enthaltenden Innenmasche direkt anliegt, der Außendurchmesser des Hüllrohres größer gewählt als der Außendurchmesser eines Brennstabes am Rand des Hüllrohres.

Diese Ausführungsform der Erfindung ist im Anspruch 10 angegeben. Durch Kombination der beiden Brennstabgruppen und andere vorteilhafte Weiterbildungen ergeben sich Ausführungsformen nach den Unteransprüchen 11 bis 18.

Ausführungsbeispiele der Erfindung sind in der Zeichnung dargestellt. Darin zeigen:

Fig. 1      eine Schrägansicht eines Brennelements für einen Druckwasser-Kernreaktor,

Fig. 2      den Gesamtquerschnitt eines Brennelements gemäß einer ersten Ausführung,

Fig. 3      einen Detailausschnitt aus einem Brennelementquerschnitt gemäß der Ausführung von Fig. 2 mit einem größeren Hüllrohraußendurchmesser der Brennstäbe in unmittelbarer Nähe eines Führungsrohres (oder Instrumentierungsrohres oder Moderatorstabes) im Vergleich zu weiter entfernt gelegenen Brennstäben,

Fig. 4      einen Detailausschnitt aus einem Brennelementquerschnitt gemäß einer zweiten Ausführung mit vorgegebenem Abstand jeweils zwischen den Querschnittsmittelpunkten eines Führungsrohres (oder Instrumentierungsrohres oder Moderatorstabes) und zweier zu diesem unmittelbar benachbarter Brennstäbe, welcher Abstand geringer ist als der Abstand (Standardabstand) zwischen den Querschnittsmittelpunkten weiter entfernter Brennstäbe,

Fig. 5      einen Detailausschnitt aus einem Brennelementquerschnitt an der Brennelementecke gemäß einer dritten Ausführung mit vorgegebenem Abstand der Querschnittsmittelpunkte einer Reihe von Randbrennstäben von den Brennstäben der nächsten, weiter innen gelegenen Reihe von Brennstäben, welcher Abstand größer ist als der Abstand (Standardabstand) der noch weiter innen gelegenen Brennstabreihen,

Fig. 6       einen Detailausschnitt aus einem Brennelementquerschnitt an der Brennelementecke gemäß einer vierten Ausführung mit Brennstäben kleineren Querschnitts im Vergleich zu den anderen Normalbrennstäben,

Fig. 7 - 9    jeweils zwei benachbarte Brennstäbe mit unterschiedlichem Verhältnis der Hüllrohrwandstärke zum Hüllrohraußendurchmesser, und

Fig. 10    in schematischer Darstellung einen Druckwasserreaktor, bei dem Brennelemente und Verteilungen dieser Brennelemente nach Fig. 1 bis 9 einsetzbar sind.

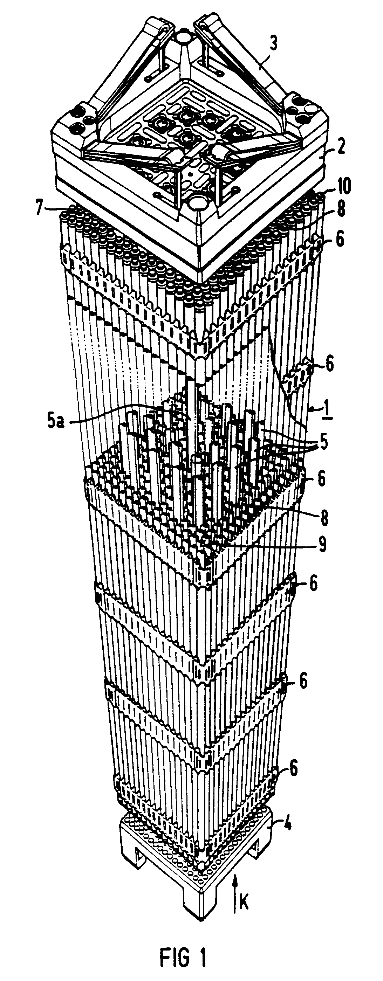

In Fig. 1 ist ein 17 x 17 Brennelement 1 dargestellt, das einen Brennelementkopf 2 mit Niederhaltefedern 3, einen Brennelementfuß 4, eine Anzahl von n = 24 Führungsrohren 5, ein Instrumentierungsrohr 5a, quadratisch-gitterförmige Abstandhalter 6 sowie runde Brennstäbe 7, 8, 9 und 10, die mit Brennstoff in Form von zylindrischen Pellets gefüllt sind, umfaßt. Die am Rand 11 gelegenen Randbrennstäbe sind dabei mit 10 bezeichnet. Die Brennstäbe 7, 8, 9, 10 sind üblicherweise in einer im Querschnitt streng quadratischen Gitteranordnung aufgebaut, also in einer vorgegebenen gleichmäßigen Verteilung angeordnet; wie im folgenden deutlich wird, wird gemäß zumindest einer Ausführungsform der Erfindung von dieser streng quadratischen Gitteranordnung abgewichen. Der mögliche konstruktive Unterschied zwischen den Brennstäben 7 bis 18 wird später verdeutlicht. Die Brennstäbe 7 sind dabei z.B. konventionelle Standard-Brennstäbe.

In einem Reaktorkern ist in der Regel eine vorgegebene Anzahl von untereinander gleichen Brennelementen 1 vorgesehen. Diese sind in einem Reaktordruckbehälter angeordnet; sie werden jeweils in Richtung des eingezeichneten Pfeiles von unten nach oben von einem Kühlmittel K durchströmt. Die Brennstäbe 7, 8, 9, 10 des Brennelementes 1 werden in einer Tragstruktur gehalten, die aus dem Brennelementkopf 2, versehen mit den vier Niederhaltefedern 3, dem Brennelementfuß 4, den dazwischenliegenden Führungsrohren 5 für nicht gezeigte Steuerstäbe sowie, abhängig vom Brennelementtyp, dem zentralen Instrumentierungsrohr 5a besteht. An den Führungsrohren 5 sind die gitterförmigen Abstandhalter 6 mit quadratischem Abstandhalterquerschnitt und flächengleichen Maschen befestigt, welche die Brennstäbe 7, 8, 9, 10, von denen jeder durch eine Masche geführt ist, zu einem Bündel zusammenfassen und derart halten, daß sie sich axial frei ausdehen können. Durch die seitlich offene Konstruktion des Brennelementes 1 wird eine Quervermischungdes Kühlmittels K ermöglicht und dessen Aufwärmung vergleichmäßigt.

In Fig. 2 ist ein Gesamtquerschnitt eines gitterförmigen Abstandhalters 6 eines Brennelementes 1 nach Fig. 1 beispielhaft für einen Druckwasserreaktor mit 17 x 17 = 289 Gittermaschen dargestellt. Dieses Brennelement 1 besitzt 264 Brennstäbe 7, 8A, 10 sowie 24 symmetrisch verteilte Führungsrohre 5 und ein zentrales Instrumentierungsrohr 5a. Die Zeichnung zeigt nur Brennstäbe 7, 8A, 10 mit dem gleichen gegenseitigen Abstand P1 der Querschnittspunkte, und zwar sowohl in Längs- als auch in Querrichtung des Gitters (gleichmäßige Verteilung in einem quadratischen Grundnetz). Der Abstand P1 kann z.B. 12,6 mm betragen. Er liegt also dem Gitter in jedem Bereich zugrunde und kann als Standardabstand bezeichnet werden.

Mindestens ein (nach rechts schraffiert gezeichneter) Brennstab 8A in der unmittelbaren Nähe eines Führungsrohres 5 und/oder des Instrumentierungsrohres 5a soll zur besonders guten wirtschaftlichen Ausnutzung des Kernbrennstoffs (z.B. Uranoxid oder insbesondere Uran-Plutonium-Mischoxid) einen größeren Hüllrohraußendurchmesser, z.B. 9,5 mm oder 9,7 mm, aufweisen, als ein weiter vom Führungs- und Instrumentierungsrohr 5, 5a entfernter Brennstab. Diese weiter entfernten dünneren Brennstäbe (nach links schraffiert gezeichnet) sind vorliegend mit 7 bezeichnet. In Fig. 2 ist der bevorzugte Fall dargestellt, daß alle unmittelbar benachbarten Brennstäbe den größeren Durchmesser haben, während alle Randmaschen 10 und alle übrigen, den Randmaschen benachbarte, Maschen dünnere Brennstäbe enthalten.

Zu den "weiter entfernten Brennstäben" zählen vorliegend auch die vier Reihen an Randbrennstäben 10. Der Hüllrohraußendurchmesser der weiter entfernten Brennstäbe 7 beträgt z.B. jeweils 9,14 oder 9,30 mm. Bei diesem Ausführungsbeispiel haben sämtliche, also alle (nach links schraffierten) weiter entfernten Brennstäbe 7 einen kleineren Durchmesser als die unmittelbar zu den Rohren 5, 5a benachbarten Brennstäbe 8A. Zu den "weiter entfernten Brennstäben 7" können vorliegend auch bereits - ganz oder teilweise - die vier benachbarten, jeweils in Diagonalrichtung liegenden Brennstäbe 7 zählen. Dies hängt von der gewünschten Vergleichmäßigung ab.

Dieses Ausführungsbeispiel zeigt also auch, daß die Brennstäbe 10 am Rand des Brennelementes 1 einen kleineren Hüllrohraußendurchmesser, z.B. ebenfalls von 9,14 oder 9,30 mm aufweisen als sämtliche Brennstäbe 8A im Zentrum des Brennelementes 1. Dieses Zentrum kann durch die (fast kreisförmige) Umfangslinie, die durch die äußeren Führungsrohre 5 gebildet wird, definiert werden.

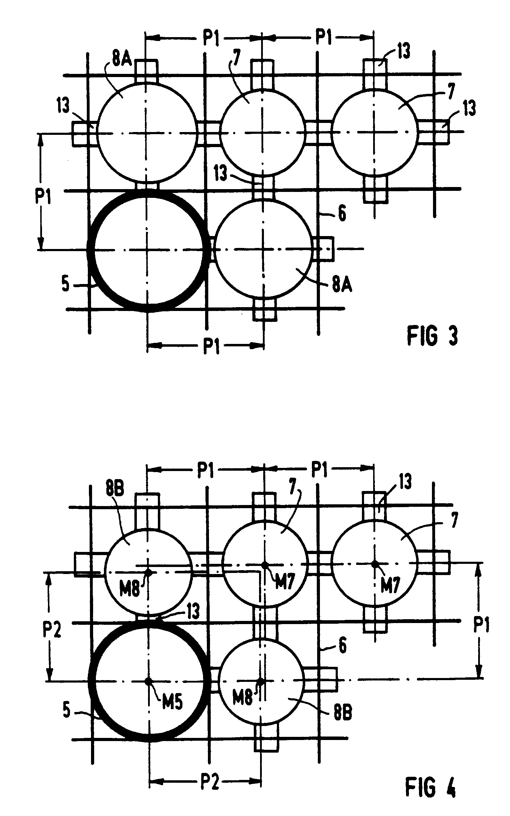

In Fig. 3 ist ein Detailausschnitt aus einer Draufsicht auf einen Brennelementquerschnitt nach der ersten Ausführungsform gemäß Fig. 2 dargestellt. Dieser Detailausschnitt zeigt noch einmal in Vergrößerung den Bereich im Brennelement 1 um ein Führungsrohr 5 (oder um das Instrumentierungsrohr 5a). Man erkennt hier deutlich, daß die beiden eingezeichneten Brennstäbe 8A, welche dem Führungsrohr 5 (bzw. dem Instrumentierungsrohr 5a) unmittelbar benachbart sind, einen größeren Hüllrohraußendurchmesser aufweisen als die weiter vom Rohr 5 (bzw. 5a) entfernten Brennstäbe 7. Abweichend von der Zeichnung könnte auch der eingezeichnete, rechts in Diagonalrichtung zum Rohr 5 liegende Brennstab 7 einen größeren Hüllrohraußendurchmesser besitzen. Entsprechend sind auch die beiden links und unterhalb des Führungsrohrs 5 liegenden Brennstäbe 8A (nicht gezeigt) von größerem Durchmesser als die Brennstäbe 7. Durch diese Dimensionierung der vier Brennstäbe 8A wird erreicht, daß in die Brennstäbe 8A nahe am Rohr 5 - bei vergrößertem Pelletdurchmesser und z.B. gleicher Wandstärke - mehr Brennstoff eingefüllt werden kann als in die Brennstäbe 7. Dadurch wird die zuvor überhöhte lokale Moderation in der Umgebung des Rohres 5 (bzw. 5a) reduziert. Durch die Dimensionierung der Brennstäbe 8A wird die gleichmäßige Brennstoff-Ausnutzung über den Querschnitt sichergestellt. Die Abstände P1 der Querschnittsmittelpunkte benachbarter, in Quer- oder Längsreihe liegender Brennstäbe 7 und/oder 8A voneinander sind gleich. Mit anderen Worten: Die Mittelpunkte der Brennstäbe 7, 8A jeder senkrechten oder horizontalen Reihe liegen auf einer geraden Linie. Die Noppe-Feder-Kombinationen zum Halten der Brennstäbe 7, 8A in den einzelnen Maschen sind hier mit 13 bezeichnet.

In Fig. 4 ist ein Detailausschnitt aus einer Draufsicht auf einen Brennelementquerschnitt nach einer zweiten Ausführung dargestellt, und zwar für eine andere Ausführungsform eines Brennelements 1, die nur unwesentlich schwieriger herstellbar ist als die Ausführungsform nach Fig. 3. Auch hier wird eine besonders gute Ausnutzung des Kernbrennstoffs erzielt. Dieser Detailausschnitt zeigt eine Vergrößerung des Bereichs im Brennelement 1 um ein Führungsrohr 5 (oder um das Instrumentierungsrohr 5a). Man erkennt, daß hier alle Brennstäbe 7, 8B von demselben Durchmesser gewählt sind. Sie enthalten bevorzugt dieselbe Menge Kernbrennstoff, d.h. gleiche Anzahl Pellets von derselben Größe. Doch auch hier sind unterschiedliche Gewichte möglich.

Weiter erkennt man, daß hier jeweils der Abstand P2 zwischen dem Querschnittsmittelpunkt M8 der beiden Brennstäbe 8B, welche dem Führungsrohr 5 (bzw. dem Instrumentierungsrohr 5a) unmittelbar benachbart sind und in Reihenrichtung liegen, einerseits und dem Querschnittsmittelpunkt M5 des Führungsrohres 5 (bzw. Instrumentierungsrohrs 5a) andererseits kleiner ist als der Standardabstand P1 der Querschnittsmittelpunkte M7 weiter entfernter (benachbarter) Brennstäbe 7. Es gilt also: P1 größer P2. Die Brennstäbe 8B sind hier also näher herangerückt an das Rohr 5, 5a.

Es ergibt sich somit jeweils im Bereich der Rohre 5, 5a eine "nicht-gleichmäßige" Verteilung, d.h. die Mittelpunkte der Brennstäbe und Führungsstäbe beschreiben die Kreuzungspunkte eines Gitters, das nicht gleichmäßig wie das Gitter des Abstandhalters, sondern im Bereich der Rohre 5, 5a deformiert ist, um eine Vereinheitlichung der Moderation sicher zustellen. Die Abstände P1, P2 sind hier wieder jeweils in Reihenrichtung gemessen.

Es sei noch angemerkt, daß auch der in Diagonalrichtung liegende Brennstab 7 näher an die Rohre 5, 5a heranrücken kann. Dies gilt somit auch für die drei weiteren (nicht gezeigten) benachbarten Brennstäbe 7 in Diagonalrichtung.

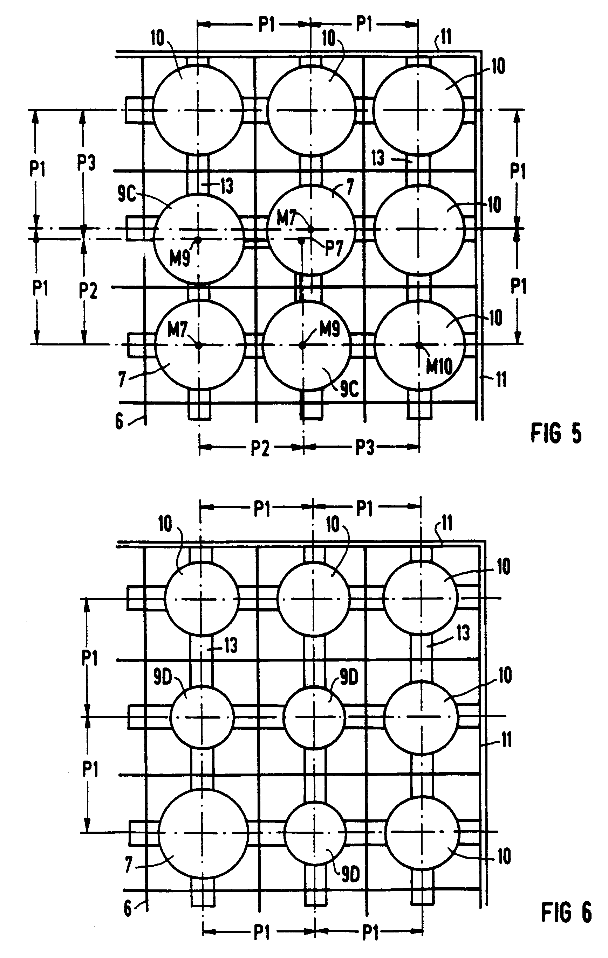

In Fig. 5 ist ein Detailausschnitt an der Brennelementecke aus einer Draufsicht auf einen Brennelementquerschnitt vergrößert dargestellt, und zwar für eine weitere Ausführungsform. Hier ist der Abstand P3 der Querschnittsmittelpunkte M9 einer Brennstäbe 9C aus der zweiten Reihe vom Querschnittsmittelpunkt M10 des benachbarten Brennstabes 10 am Brennelementrand (d.h. am Randsteg 11 des Abstandhalters) größer als der Abstand P1, P2 der inneren Brennstäbe 7, 9C. Es gilt: P3 größer P1 größer P2, und es gilt P3 = 2P1 - P2. Die Brennstäbe 7, 9C, 10 haben alle denselben Außendurchmesser. Mit anderen Worten: In Figur 5 sind die Brennstäbe 9C der jeweils zweiten Reihe vom benachbarten Randbrennstab 10 abgerückt.

In Fig. 5 ist nicht gezeigt, daß auch der Brennstab 7 in der zweiten Reihe von einem oder beiden benachbarten Brennstäben 10 der Randreihe abgerückt sein kann. Mit anderen Worten: Der Querschnittsmittelpunkt M7 des Brennstabs 7 könnte (diagonal nach innen verschoben) an der Stelle P7 sitzen. Die Durchmesser aller Brennstäbe 7, 9C, 10 sind dabei gleich groß; es kann sich um Standardbrennstäbe handeln. Auch durch diese Maßnahme wird im Bereich der Ränder 11 eine Vergleichmäßigung der Heißstellen und eine lokale Erhöhung der Ausnutzung des Brennstoffs sichergestellt.

In den Figuren 4 und 5 bilden die "nicht-verschobenen" Brennstäbe 7 bzw. 7 und 10 eine erste Gruppe und die "verschobenen" Brennstäbe 8B bzw. 9C eine zweite Gruppe.

In Fig. 6 ist dargestellt, wie dies Ergebnis auch noch auf eine andere Weise sichergestellt werden kann. Die Brennstäbe 10 der Randreihe haben hier jeweils einen kleineren Außendurchmesser als ein weiter innen gelegener Brennstab 7, z.B. ein Standard-Brennstab; sie enthalten damit - bei gleicher Hüllrohr-Wandstärke - auch weniger Brennstoff. Darüber hinaus sind die Brennstäbe 9D der zweiten Reihe ebenfalls dünner als die Brennstäbe 7, die ja z.B. als Standard-Brennstäbe ausgeführt sein können. Die Brennstäbe 9D und 10 können hier - abweichend von der Zeichnung - bevorzugt denselben Außendurchmesser besitzen, um die Typenvielfalt und damit die Fertigungskosten gering zu halten. Die Abstände P1 aller benachbarten Brennstäbe 7, 9D und 10 sind gleich groß. Die Wirkung der in Fig. 6 getroffenen Maßnahmen entspricht derjenigen der bei Fig. 5 getroffenen Maßnahmen, wenn in Fig. 5 die Abstände P2, P3 geeignet gewählt sind.

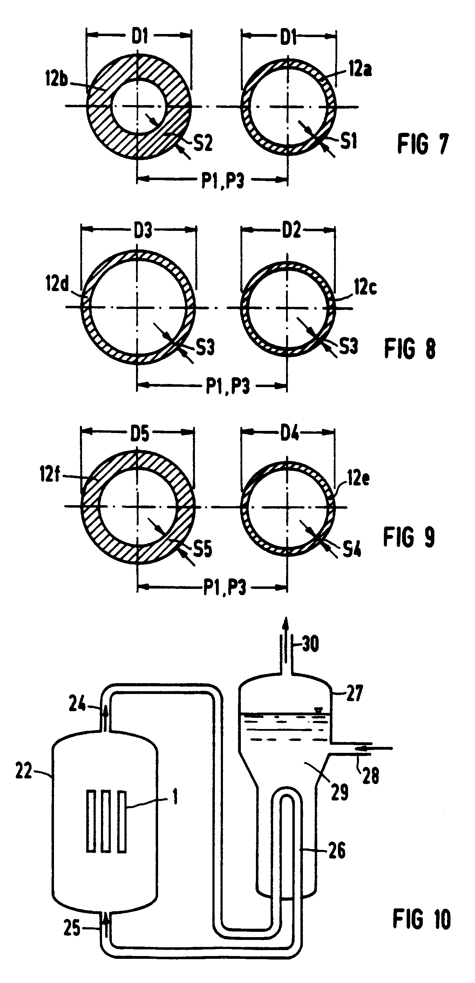

Fig. 7 zeigt zwei benachbarte Brennstäbe 12a und 12b mit gleichem Außendurchmesser D1, bei denen ein Brennstab 12a ein anderes Verhältnis s1/D1 der Hüllrohrwandstärke s1 zum Hüllrohraußendurchmesser D1 aufweist als der benachbarte Brennstab 12b, dessen Verhältnis s2/D2 größer ist als s1/D1. Der Brennstab 12a kann mehr Brennstoff aufnehmen als der Brennstab 12b.

Fig. 8 zeigt zwei benachbarte Brennstäbe 12c, 12d mit unterschiedlichem Außendurchmesser D2 bzw. D3 (D3 größer D2). Es ist hier angenommen, daß die Wandstärke s3 beider Hüllrohre 12c, 12d gleich groß ist. Für die Verhältnisse gilt demnach: s3/D2 ist größer als s3/D3. Der Brennstab 12d kann hier mehr Brennstoff aufnehmen als der Brennstab 12c.

Fig. 9 zeigt zwei benachbarte Brennstäbe 12e und 12f, für deren Außendurchmesser D4 bzw. D5 die Beziehung D4 kleiner D5 und für deren Hüllrohrwandstärken s4 bzw. s5 die Beziehung s4 kleiner s5 gilt. Die Bemessung ist hier so getroffen, daß gilt: s4/D4 = s5/D5. Damit ist eine mechanische Stabilität gewährleistet. Hier kann der Brennstab 12e mehr Brennstoff enthalten als der Brennstab 12f.

Nach Fig. 10 hat ein Druckwasser-Kernreaktor einen Druckbehälter 22, in dem sich ein Reaktorkern aus schematisch dargestellten Kernreaktor-Brennelementen 1 mit Brennstäben nach einer Ausführungsform wie oben beschrieben befindet.

Der Austritt 24 für Wasser (Kühlmittel und zugleich Moderator) aus dem Druckbehälter 22 und damit auch aus dem Reaktorkern mit den Kernreaktor-Brennelementen 1 ist an einem Ende eines Primärrohres 26 eines Dampferzeugers 27 angeschlossen. Der Eintritt 25 für das Wasser in den Druckbehälter 22 und damit auch in den Reaktorkern ist am anderen Ende des Primärrohres 26 angeschlossen. Der durch den Druckbehälter 22 und das Primärrohr 26 gebildete Primärkreis ist abgeschlossen, so daß sich in diesem Primärkreis und damit auch im Reaktorkern kein Wasserdampf bilden kann. Wasserdampf bildet sich auf der Sekundärseite des Dampferzeugers 27, der einen Zuführstutzen 28 für Speisewasser 29 und einen Austrittsstutzen 30 für Dampf hat. Der Dampf wird von diesem Austrittsstutzen 30 beispielsweise zu einer nicht dargestellten Dampfturbine geführt.

**Patentansprüche**

1. Brennelement für einen Druckwasser-Kernreaktor mit
   a) einem Bündel aus zueinander parallelen, jeweils in einem Hüllrohr Kernbrennstoff enthaltenden Brennstäben (7,8A,10), einer vorgegebenen Anzahl von Führungsrohren (5) für Steuerstäbe und gegebenenfalls mindestens einem Instrumentierungsrohr (5a);
   b) einer Tragstruktur aus einem Brennelementkopf (2) am oberen Ende, einem Brennelementfuß (4) am unteren Ende und mehreren zu den Brennstäben senkrechten Abstandhaltern (6), die eine gleichmäßige Gitterstruktur aufweisen mit Randmaschen am Rand des Brennelementes und Innenmaschen im Innern des Brennelementes, wobei alle Innenmaschen jeweils von vier unmittelbar anliegenden Maschen umgeben sind, gleiche Fläche besitzen und jeweils einen Brennstab oder ein Führungs- oder Instrumentierungsrohr enthalten; dadurch gekennzeichnet, daß
   c) für jede ein Führungsrohr (5) enthaltende Innenmasche jeweils mindestens eine der vier unmittelbar anliegenden Maschen einen Brennstab (8a) enthält, der entweder
      (i) einen größeren Außendurchmesser seines Hüllrohres aufweist als ein Brennstab (10) in einer Randmasche, oder
      (ii) gegenüber dem Mittelpunkt seiner Masche in Richtung auf das Führungsrohr versetzt angeordnet ist (FIG 2).

2. Brennelement nach Anspruch 1, **dadurch gekennzeichnet**, daß mindestens alle vier an eine ein Führungsrohr oder ein Instrumentierungsrohr enthaltende Innenmasche anliegenden Maschen Brennstäbe (8A,8B) enthalten, die entweder den größeren Durchmesser besitzen oder versetzt angeordnet sind. (FIG 3, FIG 4)

3. Brennelement nach Anspruch 1 oder 2, **dadurch gekennzeichnet**, daß alle Brennstäbe (10) in den Randmaschen einen kleineren Außendurchmesser ihres Hüllrohres besitzen als ein Brennstab (8A) in einer Innenmasche, die unmittelbar an einer ein Führungsrohr enthaltende Innenmasche anliegt. (FIG 2)

4. Brennelement nach Anspruch 3, **dadurch gekennzeichnet**, daß in Innenmaschen, die an Randmaschen anliegen und nicht einer ein Führungsrohr oder ein Instrumentierungsrohr enthaltene Innenmasche benachbart sind, die Brennstäbe (9D) einen kleineren Durchmesser aufweisen als ein Brennstab in einer Innenmasche, die unmittelbar an einer ein Führungsrohr enthaltene Innenmasche anleigt. (FIG 6)

5. Brennelement nach Anspruch 4, **dadurch gekennzeichnet**, daß alle Brennstäbe mit kleinerem Durchmesser den gleichen kleinen Durchmesser und alle anderen Brennstäbe den gleichen größeren Durchmesser aufweisen. (FIG 2)

6. Brennelement nach Anspruch 1 oder 2, **dadurch gekennzeichnet**, daß mindestens einer der beiden Brennstäbe (9C,10), die in einer Randmasche und in einer daran unmittelbar anliegenden Innenmasche angeordnet sind, derartig gegenüber dem Mittelpunkt der entsprechenden Masche versetzt ist, daß der Abstand dieser beiden Brennstäbe größer ist als der Standardabstand zwischen in Maschenmittelpunkten angeordneten Brennstäben. (FIG 5)

7. Brennelement nach einem der Ansprüche 1 bis 5, **dadurch gekennzeichnet,** daß alle Abstände (P1) der Querschnittsmittelpunkte benachbarter Brennstäbe (7, 8A;7,9D,10) gleich sind, so daß eine gleichmäßige Verteilung gegeben ist. (FIG 3, FIG 6)

8. Brennelement nach Anspruch 2 oder 6, **dadurch gekennzeichnet,** daß der Außendurchmesser (D) der Hüllrohre der Brennstäbe gleich ist, aber eine nicht-gleichmäßige Verteilung vorhanden ist (FIG 4, FIG 5, FIG 7).

9. Brennelement nach einem der Ansprüche 1 bis 8, **dadurch gekennzeichnet,** daß mindestens ein Brennstab (12a, 12c, 12e) ein anderes Verhältnis (s/D) der Hüllrohrwandstärke (s) zum Hüllrohraußendurchmesser (D) aufweist als ein anderer Brennstab (12b, 12d, 12f).

10. Brennelement mit
    a) einem gitterförmigen Abstandhalter (6) mit einem rechteckigen, vorzugsweise quadratischen Abstandhalterquerschnitt und mit quadratischen Abstandhaltermaschen gleicher Fläche,
    b) einem Bündel zueinander paralleler, Kernbrennstoff in einem Hüllrohr enthaltender, Brennstäbe (7,8A,8B,9C,9D,10), und im Bündelinneren angeordneter Führungsrohre (5) wobei Brennstäbe und Führungsrohre einen kreisrunden Querschnitt haben und jeweils durch eine Abstandhaltermasche geführt sind, gekennzeichnet durch
    c) eine erste Brennstabgruppe, in der die Anzahl z1 der Brennstäbe (7, 8A, 9D, 10) z1 = 0; 1 oder mehr als 1 ist und deren Brennstäbe (7, 8A, 9D, 10) einen Querschnittsmittelpunkt haben, der sich jeweils im Diagonalenschnittpunkt einer Abstandhaltermasche befindet,
    d) eine zweite Brennstabgruppe, in der die Anzahl z2 der Brennstäbe (8B,9C) z2 = 0; 1 oder mehr als 1 ist und deren Brennstäbe (8B,9C) einen Querschnittsmittelpunkt haben, der sich jeweils außerhalb des Diagonalenschnittpunktes einer Abstandhaltermasche befindet, und
    e) eine Summe ungleich 0 der Anzahl der Brennstäbe (7,8A,8B, 9C,9D,10) der ersten und der zweiten Brennstabgruppe, wobei
    f) bei der Anzahl 0 der Brennstäbe (8B,9C)- in der zweiten Brennstabgruppe,
        (i) ein erster Brennstab (8A) der ersten Brennstabgruppe durch eine Abstandhaltermasche geführt ist, die mit einer Breitseite an einer Masche anliegt, durch die ein Führungsrohr geführt ist, und
        (ii) ein zweiter Brennstab (10) der ersten Brennstabgruppe einen kleineren Durchmesser als der erste Brennstab besitzt und am Rand des Brennstabbündels angeordnet ist,
    bzw., bei einer Anzahl z2 ungleich O der Brennstäbe (8B,9C) in der zweiten Brennstabgruppe, mindestens ein einem Führungsrohr benachbartem Brennstab (8B) vorgesehen ist, dessen Abstand (P2) vom Führungsrohr (5) kleiner ist als der Abstand (P1) zweier Brennstäbe, die keinem Führungsrohr benachbart sind.

11. Brennelement nach Anspruch 10 mit der Anzahl 1 oder mehr als 1 der Brennstäbe (8B,9C) in jeder Brennstabgruppe und mit gleichem Außendurchmesser aller Brennstäbe (7,8A,9D,10) der ersten Brennstabgruppe.

12. Brennelement nach Anspruch 10 mit gleichem Außendurchmesser aller Brennstäbe (8B,9C) der zweiten Brennstabgruppe.

13. Brennelement nach Anspruch 10 mit gleichem Außendurchmesser aller Brennstäbe (7,8A,8B,9C,9D,10).

14. Brennelement nach Anspruch 12 mit der Anzahl 1 oder mehr als 1 jeder Brennstabgruppe und mit einem Außendurchmesser der Brennstäbe (8B,9C) der zweiten Brennstabgruppe, der verschieden ist von dem Außendurchmesser der Brennstäbe (7,8A, 9D,10) der ersten Brennstabgruppe.

15. Brennelement nach Anspruch 10 mit unterschiedlichem Durchmesser der zur zweiten Brennstabgruppe gehörenden Brennstäbe (8B, 9C).

16. Brennelement nach Anspruch 15 mit in den Abstandhaltermaschen am Rand (11) des gitterförmigen Abstandhalters (6) befindlichen Brennstäben (10) der zweiten Brennstabgruppe.

17. Brennelement nach Anspruch 14 mit Brennstäben der zweiten Brennstabgruppe, die sich in den Abstandhaltermaschen am Rand des gitterförmigen Abstandhalters (6) befinden und einen kleineren Außendurchmesser haben als die Brennstäbe der ersten Brennstabgruppe.

18. Brennelement nach Anspruch 6 oder 7 mit in den Abstandhaltermaschen am Rand (11) des gitterförmigen Abstandhalters (6) befindlichen Brennstäben (12a,12e), deren Hüllrohre eine geringere Wandstärke haben als die Hüllrohre der anderen Brennstäbe (12b,12f). (FIG 7, FIG 9)

## Claims

1. Fuel element for a pressurised-water nuclear reactor having
    a) a bundle of fuel rods (7,8A,10), which are parallel to each and each contain nuclear fuel in a cladding tube, and a given number of guide tubes (5) for control rods and, if applicable, at least one instrumentation tube (5a);
    b) a supporting structure consisting of a fuel element head (2) at the upper end, a fuel element base (4) at the lower end and several spacers (6) which are perpendicular to the fuel rods and have a uniform grid structure with edge meshes at the edge of the fuel element and inner meshes in the interior of the fuel element, in which each of the inner meshes is surrounded by four meshes which are directly adjacent thereto, has the same area and in each case contains one fuel rod or one guide tube or instrumentation tube; characterised in that
    c) for each inner mesh containing a guide tube (5) in each case at least one of the four meshes lying directly adjacent thereto contains a fuel rod (8a) which either
    (i) has a cladding tube with a greater outside diameter than the cladding tube of a fuel rod (10) in an edge mesh, or
    (ii) is arranged so as to be offset in relation to the centre point of its mesh in the direction of the guide tube (Figure 2).

2. Fuel element according to claim 1, characterised in that at least all four meshes which are adjacent to an inner mesh containing a guide tube or an instrumentation tube contain fuel rods (8A,8B) which either have the greater diameter or are arranged so as to be offset. (Figure 3, Figure 4)

3. Fuel element according to claim 1 or 2, characterised in that all the fuel rods (10) in the edge meshes have a cladding tube with a smaller outside diameter than the cladding tube of a fuel rod (8A) in an inner mesh which is directly adjacent to an inner mesh containing a guide tube. (Figure 2)

4. Fuel element according to claim 3, characterised in that in inner meshes which are adjacent to edge meshes and which do not adjoin an inner mesh containing a guide tube or an instrumentation tube, the fuel rods (9D) have a smaller diameter than a fuel rod in an inner mesh which lies directly adjacent to an inner mesh containing a guide tube. (Figure 6)

5. Fuel element according to claim 4, characterised in that all the fuel rods with a smaller diameter have the same small diameter and all the other fuel rods have the same greater diameter. (Figure 2)

6. Fuel element according to claim 1 or 2, characterised in that at least one of the two fuel rods (9C,10), which are arranged in an edge mesh and in an inner mesh directly adjacent thereto, is offset in relation to the centre point of the corresponding mesh in such a way that the spacing of these two fuel rods is greater than the standard spacing between fuel rods arranged at mesh centre points. (Figure 5)

7. Fuel element according to one of the claims 1 to 5, characterised in that all the spacings (P1) of the cross-sectional centre points of adjoining fuel rods (7,8A; 7,9D,10) are equal so that there is uniform distribution. (Figure 3, Figure 6)

8. Fuel element according to claim 2 or 6, characterised in that the outside diameter (D) of the cladding tubes of the fuel rods is equal, but there is non-uniform distribution (Figure 4, Figure 5, Figure 7).

9. Fuel element according to one of the claims 1 to 8, characterised in that at least one fuel rod (12a, 12c, 12e) has a different ratio (s/D) of cladding tube wall thickness (s) to cladding wall outside diameter (D) than another fuel rod (12b, 12d, 12f).

10. Fuel element having
   a) a grid-like spacer (6) having a rectangular, preferably square, spacer cross-section and having square spacer meshes of equal area,
   b) a bundle of fuel rods (7,8A,8B,9C,9D,10), which are parallel to each other and contain nuclear fuel in a cladding tube, and guide tubes (5) arranged in the interior of the bundle, with fuel rods and guide tubes having a circular cross-section and each being guided through a spacer mesh, characterised by
   c) a first fuel rod group, in which the number $z1$ of the fuel rods (7, 8A, 9D, 10) is $z1 = 0$; 1 or more than 1 and the fuel rods (7, 8A, 9D, 10) of which have a cross-sectional centre point which in each case is located at the point of intersection of diagonals of a spacer mesh,
   d) a second fuel rod group, in which the number $z2$ of the fuel rods (8B,9C) is $z2 = 0$; 1 or more than 1 and the fuel rods (8B,9C) of which have a cross-sectional centre point which in each case is located outside the point of intersection of diagonals of a spacer mesh, and
   e) a sum, which is not equal to 0, of the number of fuel rods (7,8A,8B,9C,9D,10) of the first and the second fuel rod group, in which case
   f) if the number of the fuel rods (8B,9C) in the second fuel rod group is 0,
      (i) a first fuel rod (8A) of the first fuel rod group is guided through a spacer mesh, the one broad side of which is adjacent to a mesh through which a guide tube is guided, and
      (ii) a second fuel rod (10) of the first fuel rod group has a smaller diameter than the first fuel rod and is arranged at the edge of the fuel rod bundle,
   or if the number $z2$ of the fuel rods (8B,9C) in the second fuel rod group is not equal to 0, at least one fuel rod (8B) is provided adjoining a guide tube, the spacing (P2) of which fuel rod (8B) from the guide tube (5) is smaller than the spacing (P1) of two fuel rods which do not adjoin a guide tube.

11. Fuel element according to claim 10, wherein the number of the fuel rods (8B,9C) in each fuel rod group is 1 or more than 1 and all the fuel rods (7,8A,9D,10) of the first fuel rod group have the same outside diameter.

12. Fuel element according to claim 10, wherein all the fuel rods (8B,9C) of the second fuel rod group have the same outside diameter.

13. Fuel element according to claim 10, wherein all the fuel rods (7,8A,8B,9C,9D,10) have the same outside diameter.

14. Fuel element according to claim 12, wherein the number for each fuel rod group is 1 or more than 1 and the fuel rods (8B, 9C) of the second fuel rod group have an outside diameter that is different from the outside diameter of the fuel rods (7, 8A, 9D, 10) of the first fuel rod group.

15. Fuel element according to claim 10, wherein the fuel rods (8B, 9C) belonging to the second fuel rod group have different diameters.

16. Fuel element according to claim 15 having fuel rods (10) of the second fuel rod group that are located in the spacer meshes at the edge (11) of the grid-like spacer (6).

17. Fuel element according to claim 14 having fuel rods of the second fuel rod group that are located in the spacer meshes at the edge of the grid-like spacer (6) and have a smaller outside diameter than the fuel rods of the first fuel rod group.

18. Fuel element according to claim 6 or 7 having fuel rods (12a,12e) located in the spacer meshes at the edge (11) of the grid-like spacer (6), the cladding tubes of which fuel rods (12a, 12e) have a lesser wall thickness than the cladding tubes of the other fuel rods (12b,12f). (Figure 7, Figure 9)

**Revendications**

1. Assemblage combustible pour un réacteur nucléaire à eau sous pression, comprenant
   a) un faisceau de crayons combustibles (7,8A,10) parallèles contenant chacun de la matière combustible nucléaire dans un tube de gainage, un nombre prescrit de tubes-guides (5) pour des barres de commande et, le cas échéant, au moins un tube d'instrumentation (5a);

b) une structure porteuse constituée d'une tête (2) d'assemblage combustible à l'extrémité supérieure, d'un pied (4) d'assemblage combustible à l'extrémité inférieure et de plusieurs entretoises (6) perpendiculaires aux crayons combustibles, qui ont une structure uniforme en grille ayant des mailles marginales au bord de l'assemblage combustible et des mailles intérieures à l'intérieur de l'assemblage combustible, toutes les mailles intérieures étant entourées chacune de quatre mailles directement adjacentes, ayant la même surface et contenant chacune un crayon combustible ou un tube-guide ou d'instrumentation; caractérisé en ce que

c) pour chaque maille intérieure contenant un tube-guide (5), l'une au moins des quatre mailles directement adjacentes contient un crayon combustible (8A) qui ou bien

(i) a un diamètre extérieur de son tube de gainage plus grand qu'un crayon combustible (10) d'une maille marginale, ou bien

(ii) est décalé en direction du tube-guide par rapport au centre de sa maille (figure 2).

2. Assemblage combustible suivant la revendication 1, caractérisé en ce qu'au moins toutes les quatre mailles adjacentes à une maille intérieure contenant un tube-guide ou un tube d'instrumentation contiennent des crayons combustibles (8A,8B) qui ou bien ont le diamètre plus grand ou bien sont décalés (figure 3, figure 4).

3. Assemblage combustible suivant la revendication 1 ou 2, caractérisé en ce que tous les crayons combustibles (10) des mailles marginales ont un diamètre extérieur de leur tube de gainage plus petit qu'un crayon combustible (8A) d'une maille intérieure qui est directement adjacente à une maille intérieure contenant un tube-guide (figure 2).

4. Assemblage combustible suivant la revendication 3, caractérisé en ce que dans des mailles intérieures qui sont adjacentes aux mailles marginales et qui ne sont pas voisines d'une maille intérieure contenant un tube-guide ou un tube d'instrumentation, les crayons combustibles (9D) ont un diamètre plus petit qu'un crayon combustible d'une maille intérieure qui est directement adjacente à une maille intérieure contenant un tube-guide (figure 6).

5. Assemblage combustible suivant la revendication 4, caractérisé en ce que tous les crayons combustibles ayant un diamètre plus petit ont le même diamètre petit et tous les autres crayons combustibles ont le même diamètre plus grand (figure 2).

6. Assemblage combustible suivant la revendication 1 ou 2, caractérisé en ce qu'au moins l'un des deux crayons combustibles (9C,10) disposés dans une maille marginale et dans une maille intérieure qui lui est directement adjacente, est décalé par rapport au centre de la maille correspondante de manière que la distance entre ces deux crayons combustibles soit plus grande que la distance normalisée entre des crayons combustibles disposés au centre de mailles (figure 5).

7. Assemblage combustible suivant l'une des revendications 1 à 5, caractérisé en ce que toutes les distances (P1) du centre de la section transversale de crayons combustibles (7,8A;7,9D,10) voisins sont égales de manière à obtenir une répartition uniforme (figure 3, figure 6).

8. Assemblage combustible suivant la revendication 2 ou 6, caractérisé en ce que le diamètre extérieur (D) du tube de gainage des crayons combustibles est le même, mais la répartition n'est pas uniforme (figure 4, figure 5, figure 7).

9. Assemblage combustible suivant l'une des revendications 1 à 8, caractérisé en ce qu'au moins un crayon combustible (12a,12c, 12e) a un autre rapport (s/D) de l'épaisseur (s) du tube de gainage au diamètre (D) extérieur du tube de gainage qu'un autre crayon combustible (12b,12d,12f).

10. Assemblage combustible comprenant

a) une entretoise (6) en forme de grille ayant une section transversale rectangulaire et, de préférence, carrée et des mailles d'entretoises carrées de même surface,

b) un faisceau de crayons combustibles (7,8A,8B,9C,9D,10) parallèles et contenant de la matière combustible nucléaire (tube de gainage), et des tubes-guides (5) disposés à l'intérieur du faisceau, des crayons combustibles et des tubes de gainage ayant une section transversale circulaire et passant chacun respectivement dans une maille de l'entretoise, caractérisé par

c) un premier groupe de crayons dans lequel le nombre z1 des crayons combustibles (7,8A,9D,10) est égal à 0 ou à 1 ou est supérieur à 1 et dont les crayons combustibles (7,8A, 9D,10) ont un centre de section transversale qui se trouve respectivement au point d'intersection des diagonales d'une maille de l'entretoise,

d) un deuxième groupe de crayons combustibles, dans lequel le nombre z2 des crayons combustibles (8B,9C) est égal à 0, à 1 ou est supérieur à 1, et dont les crayons combustibles (8B,9C) ont un centre de section transversale qui se trouve respectivement à l'extérieur du point d'intersection des diagonales d'une maille de l'entretoise, et

e) une somme différente de 0 du nombre de crayons combustibles (7,8A,8B,9C,9D,10) du premier et du deuxième groupes de crayons,

f) dans le cas où le nombre des crayons combustibles (8B,9C) du deuxième groupe de crayon combustible est égal à 0,

   (i) un premier crayon combustible (8A) du premier groupe de crayons combustibles passe dans une maille de l'entretoise qui est adjacente à un grand côté d'une maille dans laquelle passe un tube-guide, et

   (ii) un deuxième crayon combustible (10) du premier groupe de crayons combustibles a un diamètre plus petit que le premier crayon et se trouve au bord du faisceau de crayons combustibles.

et, lorsque le nombre z2 de crayons combustibles (8B,9C) du deuxième groupe de crayons combustibles est différent de 0, il est prévu au moins un crayon combustible (8B) qui est voisin d'un tube (10) et dont la distance (P2) au tube-guide (5) est inférieure à la distance (P1) entre deux crayons combustibles qui ne sont pas voisins d'un tube-guide.

11. Assemblage combustible suivant la revendication 10, ayant un nombre de crayons combustibles (8B,9C) dans chaque groupe de crayons combustibles de 1 ou supérieur à 1, le diamètre extérieur de tous les crayons combustibles (7,8A,9D,10) du premier groupe de crayons combustibles étant le même.

12. Assemblage combustible suivant la revendication 10, dans lequel tous les crayons combustibles (8B,9C) du deuxième groupe de crayons ont le même diamètre extérieur.

13. Assemblage combustible suivant la revendication 10, dans lequel tous les crayons combustibles (7,8A,9B,9C, 9D,10) ont le même diamètre extérieur.

14. Assemblage combustible suivant la revendication 12, dans lequel le nombre des crayons combustibles de chaque groupe de crayons combustibles est égal à 1 ou est supérieur à 1, et dans lequel le diamètre extérieur des crayons combustibles (8B,9C) du deuxième groupe de crayons diffère du diamètre extérieur des crayons combustibles (7,8A,9D,10) du premier groupe de crayons.

15. Assemblage combustible suivant la revendication 10 à diamètre différent des crayons combustibles (8D,9C) appartenant au deuxième groupe de crayons combustibles.

16. Assemblage combustible suivant la revendication 15, comprenant des crayons combustibles (10) du deuxième groupe de crayons se trouvant dans les mailles marginales au bord de l'entretoise (6) en forme de grille.

17. Assemblage combustible suivant la revendication 14, comprenant des crayons combustibles du deuxième groupe de crayons combustibles, qui se trouvent dans les mailles d'entretoises au bord de l'entretoise (6) en forme de grille, et qui ont un diamètre extérieur plus petit que les crayons combustibles du premier groupe de crayons.

18. Assemblage combustible suivant la revendication 6 ou 7, comprenant des crayons combustibles (12a,12e) qui se trouvent dans les mailles du bord (11) de l'entretoise (6) en forme de grille, et dont les tubes de gainage ont une épaisseur de paroi plus petite que les tubes de gainage des autres crayons combustibles (12b,12f) (figure 7, figure 9).

FIG 1

FIG 2

FIG 3

FIG 4

FIG 5

FIG 6

FIG 7

FIG 8

FIG 9

FIG 10